# EUROPEAN PATENT SPECIFICATION

(11) **EP 1 932 128 B1**
(45) Date of publication and mention of the grant of the patent: **21.11.2012**
(21) Application number: 06765613.2
(22) Date of filing: 30.06.2006
(51) Int. Cl.: G08G 1/123, B60R 25/10

(54) **VEHICLE MONITORING**
FAHRZEUGÜBERWACHUNG
SURVEILLANCE DE VEHICULE

(30) Priority: 06.10.2005 ZA 200508060
(43) Date of publication of application: 18.06.2008
(73) Proprietor: Digicore Technology (Pty) Limited, Centurion (ZA)
(72) Inventor: DU RAND, Deon, Centurion (ZA); MOSTERT, Johannes, Christoffel, Moreleta Park (ZA); KRIEL, Joseph, John, Centurion (ZA); VAN DER WESTHUIZEN, Jaco, Pretoria (ZA); LE ROUX, Jaco, Pretoria (ZA); BOTHA, Gerhard, Pretoria (ZA)
(74) Representative: Johansson, Anna Olivia
(86) International application number: PCT/IB2006/001813
(87) International publication number: WO 2007/039792

(56) References cited:
- EP-A2- 1 184 829
- EP-A2- 1 219 512
- US-A1- 2005 107 927
- US-A9- 2005 090 279

## Description

### FIELD OF TI-9E INVENTION

This invention relates to vehicle monitoring. More particularly, the invention relates to a system and a method for the remote monitoring of vehicles and drivers thereof.

### BACKGROUND TO THE INVENTION

Vehicle theft is an increasing problem in many parts of the world. In an attempt to reduce the theft of vehicles or to aid in the recovery thereof, various vehicle monitoring systems have been devised. In some of these systems, which are operable to locate a stolen vehicle, the vehicle to be located is generally pre-fitted with a Global Positioning System (GPS) receiver or a terrestrial Radio Frequency (RF) transmitter or both such. A number of receivers, which may be satellite or Radio Frequency receivers, such as a cellular communication towers, receive the signal transmitted by the vehicle. The vehicle's location can be determined by triangulation of the received signals.

In these systems, the owner or driver of a vehicle usually reports the vehicle as stolen by telephoning a call centre. A call centre operator then activates the facility for determining the vehicle's location as described above and despatches security officers to recover the vehicle. Systems also exist in which a transmitter is included in the vehicle and in which the transmitter is operable to communicate with the call centre to report the vehicle as stolen when an illegal action, such as a movement of the vehicle without activation of the ignition of the vehicle, movement of the vehicle out of a predefined geographical zone, or an activation of the vehicle alarm, occurs. Security officers may then be despatched to recover the vehicle before its owner is even aware that it has been stolen.

However, should the security system of a vehicle be bypassed, or should the vehicle be stolen without one of the predefined illegal actions being performed, the vehicle will not be reported as stolen until the owner discovers and reports the theft, by which time it may be too late to recover the vehicle.

Further, vehicle odometers have been used to record the distance of travel of a vehicle for the purpose of invoicing for the use of the vehicle, monitoring of a vehicle fleet or for the monitoring of expenses and tax deduction purposes. These systems generally rely on the good faith of the driver to distinguish between private and business use of the vehicle or to travel along a predetermined route. It can, however, be tedious and inconvenient to record distances in a log, and it may be difficult or impossible for the owner of a vehicle to determine whether a driver has diverted from a predetermined route.

Still further, present vehicle monitoring systems rely on communication using a central control centre as a hub for all communications with and from the relevant vehicles. Such systems are expensive and wasteful of airtime, since the number of calls or messages required may be greater than optimal.

Accordingly, there is a need for a vehicle monitoring system and method of monitoring vehicles, which will permit communications between the vehicle and preselected parties without the necessity of routing all of these communications via a communications hub. Further, there is a need for a monitoring system and method, which will permit the recordal of vehicle use parameters, such as distance travelled, in categories selected at the instance of the vehicle driver. It is also an advantage to record parameters relating the operation of the vehicle on the occurrence of predetermined events, such as vehicle accidents or excursions into or out or predetermined geographical regions, or tampering with the vehicle. Still further, there is a need for a vehicle monitoring system which is capable of operating in a direct, or "back-up mode" in the event that communication with the communications hub is temporarily compromised.

A system wherein a user can contact a vehicle to receive, after having been authorised, a status report from the vehicle is known from EP-A-1 219 512.

### OBJECT OF THE INVENTION

It is an object of the invention to provide a system for monitoring vehicles that, at least partially, alleviates some of the abovementioned problems.

### SUMMARY OF THE INVENTION

According to a first aspect of the invention there is provided a vehicle monitoring system including
a hub unit and a plurality of mobile units, each mobile unit locatable at a vehicle and including
a vehicle modem directly accessible by cellular telephone users via a cellular communications network and operable to communicate with a remote hub unit via a communications network; and
mobile control means operably connected to the vehicle cellular modem and operable, on receipt of an initiating signal from a cellular telephone to actuate a reporting function and to transmit to the remote hub unit data representative of at least one predetermined parameter relating to the vehicle and an identifier of the cellular telephone transmitting the initiating signal; and
the hub unit including
hub access means operable to access a cellular telephone network; and
a hub controller operably connected to the hub access means and having data storage means having stored thereon identification and contact details for authorized users of the monitoring system, the hub controller being operable, on receipt of a transmission from a mobile unit, to ascertain whether the identifier of the cellular telephone that transmitted the initiating signal for the said data transmission matches the identification of an authorized user and, if so, to transmit to the authorized user via the cellular telephone network preselected information related to the vehicle in question.

The communications network for communication between the mobile unit and the remote hub unit may be a cellular telephone network and communication may be via SMS or GPRS or the like, or may be any other suitable wireless network.

Further, transmission via the cellular telephone network, by users and from vehicle to hub and thence to users or the vehicle may be data (GPRS or Datacall), SMS, Short Message Peer-to-Peer Protocol, voice or other modes of transmission. The hub may access the cellular telephone network via network modem or via fixed line to a cellular telephone network operator, or in any other suitable fashion.

The hub controller may be accessible directly by authorized users of the system to ascertain information related to the instantaneous vehicle parameters and/or data saved to the data storage means of the hub controller. Then, the hub controller may be accessible via the Internet. Further, the initiating signal to the vehicle modem may be triggered by a message from an authorized user via the Internet to the hub controller on receipt of which a signal is send by the hub controller to the vehicle modem via SMS.

The vehicle cellular telephone modem may be directly accessible by cellular telephone users via SMS. Further, the vehicle cellular modem may be operable, on receipt of an incoming cellular telephone call from a user, to drop the call before a connection is made.

In addition, the mobile control means may be operable to receive and identify messages and their content from authorized users and from the hub controller in a number of ways, including: by receiving messages of differing content via the vehicle cellular modem; by means of a facility to count the number of rings made from authorized user's cell phone before the authorized user hangs up, the number being indicative of a corresponding message or meaning; by having a number of different numbers allocated to the vehicle cellular modem or by making use of additional digits available on existing numbers, the use of a particular number or additional digit being indicative of a corresponding message or meaning; or by making use of various facilities provided on the cellular telephone, such as voice, fax or data transmission, each of which being indicative of a corresponding message or meaning. Thus, in one preferred embodiment of the invention, use is made of the trailing unused digits that are available on cellular telephone networks. In most circumstances, the additional digits are simply ignored by the system. However, an additional trailing digit may be used to indicate the meaning. For example, dialling the cellphone number of the vehicle with an additional "1" may indicate a request for position; an additional digit "2" may indicate of a immobilisation command and so on. In such an embodiment of the monitoring system, the identifier transmitted to the vehicle unit will, of itself, be sufficient to indicate the existence of the message or meaning.

The mobile unit may include a GPS location device operably connected to the mobile control means and the at least one predetermined vehicle parameter may include the geographical location of the vehicle as determined by the GPS and the preselected information transmitted to the authorized user may then include the information relating to the geographical location of the vehicle. The mobile control means may be operable to transmit the geographical location (latitude and longitude) of the vehicle as determined by the GPS to the hub controller when polled by the hub controller and/or at predetermined intervals. Instead, or as well as the GPS location device, the mobile control means and/or the hub controller may be operable to ascertain the geographical location of the vehicle by triangulation using the GSM cellular telephone network and the transmission masts of the network in proximity to the vehicle, in a known manner.

The mobile unit may include a sensor selected from a list of sensors comprising:
a sensor for sensing activation of the ignition of the vehicle;
a motion sensor for sensing motion of the vehicle;
a shock sensor; and
at least one tamper detection sensor for sensing tampering with the vehicle and/or its electrical system, the respective sensor being operably connected to the mobile control means and the at least one predetermined vehicle parameter may then include the triggering of the said sensor and the preselected information transmitted to the authorized user may include information relating to the triggering of the said sensor.

Further, the mobile unit may include a sensor for sensing activation of the ignition of the vehicle and a motion sensor for sensing motion of the vehicle and the at least one predetermined vehicle parameter may include the triggering of the motion sensor without triggering of the ignition sensor and the preselected information transmitted to the authorized user may then include information relating to the said setting in motion of the vehicle.

The mobile controller may be armed to react to sensing of an event by a respective sensor by way of an SMS message received via the vehicle cellular telephone, the mobile controller transmitting to the hub controller, on receipt of the said SMS message, an identifier of the cellular telephone transmitting the initiating SMS and the hub controller being operable, on receipt of the transmission from the mobile unit, to ascertain whether the identifier of the cellular telephone that transmitted the initiating SMS for the said data transmission matches the identification of an authorized user and, if so, to transmit an instruction to the mobile controller to arm the mobile unit to react to the triggering of the respective sensor for the vehicle. Further, the hub controller may be operable, on instruction, to transmit a signal to the mobile control means, which, in turn, is connected to actuators to actuate one or more facilities available at the vehicle, including the operation of the vehicle lights, rendering of the vehicle engine inoperable, operation of a "limp mode" for the vehicle, whereby operation of the vehicle engine is intermittent or its power limited.

Preferably, the hub controller has a secure data storage means for storing identification and contact details of for authorized users of the monitoring system and a further data storage means for storing a gazetteer comprising maps of a preselected geographical region. The maps comprising the gazetteer may be street maps and the hub controller may be operable to locate geographical co-ordinates on a respective street map.

Further, the hub controller may be operable, in respect of each vehicle, to save information relating to one or more predetermined geographical regions and to identify occasions on which the vehicle moves into or out of the predetermined geographical regions and to generate an alarm and/or a report of parameters relating to trips outside the said region. The predetermined geographical regions may be defined by national or provincial or local boundaries, or may be other defined territories, such as, for example, pay-to-enter areas of cities. Further, the hub controller may be operable to trigger an alarm signal with such a region or boundary is approached within predetermined limits. The hub controller may be operable to permit predetermined authorized users of the system to define the geographical regions and to activate operation of the alarm and recording system from time-to-time. These facilities may be accessed and changed via the Internet by the predetermined authorized users. Instead, the facility may be activated and de-activated by cellular telephone message.

In a preferred embodiment of the invention, the mobile unit includes selection means operable by an operator of the vehicle to selectively categorize vehicle trips into one of a number of categories and the mobile control means may be operable to store predetermined parameters relating to trips undertaken by the vehicle and to transmit the stored parameters for each trip to the hub controller on completion of each trip and the control means may store the parameters for each trip in separate categories according to the category selected by the operator of the vehicle by means of the selection means. Then, the categories may include a category for private trips and a category for business trips. Further, the hub controller may be operable to produce reports of trips undertaken by the vehicle, broken down into private trips and business trips. The stored parameters are preferably categorized according to the state of the selection means at termination of a trip. Still further, the information made available to authorized users of the system may be categorized, preselected categories of information being made available to preselected authorized users. Then, a first category of information may be made available to a first selection of authorized users and a second category of information may be made available to a second selection of authorized users, the first category containing information relating to the location of the vehicle during trips designated as business trips and the second category containing information relating to the location of the vehicle during both business and private trips. It will then be appreciated that the first category is selected to provide business management information while protecting the privacy of the vehicle user. Further, the hub controller may have a trip calculator for calculating reporting parameters relating to the various categories of trips recorded, The hub controller may be accessible via the Internet to enable preselected authorized users of the system to amend predetermined parameters relating to the stored trip information. Thus, in the case where the user of the vehicle omits to operate the selection of categories, or categorizing means are not installed in the vehicle, the trip parameters may be recorded by default in a particular preselected category or in an "unknown" category. Thereafter, if this categorization is incorrect, the trip may be re-categorized. However, certain information, for example distance, speed, route or starting and end points may be protected from alteration.

Further, the vehicle monitoring system may be operable to operate in a number of modes, the mode of operation be selectable either by an authorized user of the system by means of an initiating signal to the mobile unit or at the instigation of the hub unit, responsive to a signal from an authorized user of the system. In a preferred embodiment of the invention, the following modes of operation are available and are triggered on receipt of an SMS containing a single preselected letter from an authorized user:
a) "W" mode: An authorized user-activated monitoring mode in which activation of the ignition of the vehicle and/or movement thereof are reported automatically only to the authorized user sending the initiating signal and the report includes the date, time, speed and heading of the vehicle.
b) "E" mode: Emergency alarm mode in which the initiating signal from the authorized user is equivalent to operation of a conventional panic switch installed in the vehicle and connected to the mobile control means or a wireless panic alarm actuator for a vehicle alarm and an alarm messages is sent to the hub controller and control room to initiate emergency response.
c) Incident mode: In one embodiment of the monitoring system, the mobile unit records the vehicle speed every second, if the control means detects that the vehicle is moving. The speed is saved to a buffer accessible by the mobile control means, which is able to hold 24 hours of speed records. The mobile control means can be polled by the remote hub unit to download information from the buffer. A special characteristic of this mode is triggered either by receipt of a signal from and authorized user or the remote hub or by means of a signal from a vehicle sensor and has the effect of protecting information saved in the vehicle buffer and may disable the overwriting of the buffer. On receipt of an incident request message, an SMS containing 112 seconds of speed recordings is transmitted from the mobile unit to the remote unit or a Datacall may be made to the mobile unit to download the full 24hour buffer. Thus, parameters relating to the operation of the vehicle on the occurrence of an event such as a collision may be saved for later use in evidence.
d) Direct Reply mode: This mode is triggered either by receipt of a signal from an authorized user or is automatically triggered in event of failure or absence of the communication link with the remote hub. Communications are then restricted to those between the mobile unit and the authorized user(s). Geographical position information is given without reference to a gazetteer and will be given in latitude and longitude or proximity to a radio beacon.
e) Monitoring mode: This is the standard mode triggered by movement of the vehicle or actuation of its ignition or where the vehicle mobile unit automatically monitors the vehicle status via its sensors and stores the information in a buffer, the contents of which are sent to the hub unit at predetermined intervals or under predetermined conditions.

Further, the system may be operable so that the mobile unit may be armed as a vehicle immobilizer and/or alarm system by means of an actuator, such as, for example, an infra-red remote control device. The system then operates as in E-mode.

According to a second aspect of the invention there is provided a method for monitoring a vehicle, the method including
receiving directly at the vehicle being monitored an initiating signal from a user of a vehicle monitoring system via a cellular telephone;
automatically transmitting from the vehicle to a hub controller, on receipt of an initiating signal, by means of a cellular telephone network, a signal containing data representative of at least one predetermined parameter relating to the vehicle and an identifier of the cellular telephone transmitting the initiating signal; and
on receipt of the signal from the vehicle, ascertaining whether the identifier of the cellular telephone that transmitted the initiating signal for the said data signal matches the identification of an authorized user and, if so, transmitting to the authorized user via the cellular telephone network preselected information related to the vehicle in question.

The hub controller may be accessible directly by authorized users of the system to ascertain information related to the instantaneous vehicle parameters and/or data saved to the data storage means of the hub controller. In one embodiment of the invention, the hub controller is accessible via the Internet.

The initiating signal may be an SMS message. Instead, the initiating signal may be an incoming cellular telephone call from a user, and the method may include the step of automatically dropping the incoming call before a connection is made.

Further, as described above, each vehicle modem may be operable to receive a variety of incoming messages of differing content, and may also be operable to receive calls on a variety of numbers and/or to count the numbers of rings from the cellular telephone of an authorized user of the system and/or to receive signals transmitted by the cellular telephone of an authorized user in a variety of modes, the identifier of the ceiiuiar telephone or number of rings or mode of transmission, in itself, being indicative of a preselected event or circumstance relating to the vehicle or the authorized user thereof.

The method may include the step of ascertaining a geographical location for the vehicle and the at least one predetermined vehicle parameter may include the geographical location of the vehicle as ascertained and the preselected information transmitted to the authorized user may then include the information relating to the geographical location of the vehicle. Preferably, the geographical location of the vehicle is ascertained by means of a GPS location device located at the vehicle. Then the method may include the steps of transmitting the geographical location of the vehicle as determined by the GPS to the hub controller when polled by the hub controller and/or at predetermined intervals. As described above, alternative methods of determining the geographical location of the vehicle, such a triangulation using the GSM network and knowledge as to the geographical co-ordinates of transmission masts for the network, may be employed.

The method may further include the step of sensing the event of at least one of:
activation of the ignition of the vehicle;
motion of the vehicle;
a shock applied to the vehicle;
tampering with the vehicle, including the electrical system thereof, and the at least one predetermined vehicle parameter may include sensing the respective event and the preselected information transmitted to the authorized user may then include information relating to the sensing of the event.

The method may include the step of sensing the event of motion of the vehicle in the absence of activation of the ignition of the vehicle and the at least one predetermined vehicle parameter may include the said sensed event and the preselected information transmitted to the authorized user may then include information relating to the event.

The method may include the steps of
receiving at the vehicle an initiating arming SMS message via the cellular telephone network; transmitting to the hub controller, on receipt of the said arming SMS message, data representative of an identifier of the cellular telephone transmitting the initiating SMS:
on receipt of the transmission by the hub controller, ascertaining whether the identifier of the cellular telephone that transmitted the initiating SMS for the said data transmission matches the identification of an authorized user and, if so, transmitting an instruction to arm a respective senor at the vehicle to sense the event.

The hub controller may have a secure data storage means for storing identification and contact details of for authorized users of the monitoring system and a further data storage means for storing a gazetteer comprising street maps of a preselected geographical region, and the method may include the steps of locating the geographical co-ordinates on a respective street map. Further, the hub controller may be operable to save information relating to one or more predetermined geographical regions and the method may include the steps of identifying occasions on which the vehicle moves into or out of the predetermined geographical region and generating an alarm and/or a report of parameters relating to trips outside the said region. The geographical regions may be as previously described.

Still further, the method may include the steps of
selectively categorizing vehicle trips into one of a number of categories;
storing at the vehicle predetermined parameters relating to trips undertaken by the vehicle and to transmitting the stored parameters for each trip to the hub controller on completion of each trip; and
storing at the hub control means the parameters for each trip in separate categories according to the category selected.

Then, the categories may include a category for private trips and a category for business trips. Further, the method may include producing reports of trips undertaken by the vehicle, broken down into private trips and business trips. The stored parameters are preferably categorized at termination of a trip.

The information made available to authorized users of the system may be categorized, preselected categories of information being made available to preselected authorized users. Then, a first category of information may be made available to a first selection of authorized users and a second category of information may be made available to a second selection of authorized users, the first category containing information relating to the location of the vehicle during trips designated as business trips and the second category containing information relating to the location of the vehicle during both business and private trips.

It will be appreciated that the vehicle monitoring system as herein described may be used to perform the method for monitoring a vehicle,

According to a third aspect of the invention there is provided a system for monitoring vehicle usage, the system including
a hub unit and a plurality of mobile units, each mobile unit locatable at a vehicle and including
a vehicle modem operable to communicate with a remote hub unit via the cellular telephone network; and
mobile control means operably connected to the vehicle modem and including selection means operable by an operator of the vehicle to selectively categorize vehicle trips into one of a number of categories, the mobile control means being operable to store predetermined parameters relating to trips undertaken by the vehicle and to transmit the stored parameters for each trip to the hub controller via the vehicle cellular telephone; and
the hub unit including
hub access means operable to access a cellular telephone network; and
a hub controller operably connected to the hub access means and having data storage means operable to store parameters for each trip in separate categories according to the selection of the operator of the vehicle by means of the selection means.

The mobile control means may be operable to transmit the stored parameters for each trip to the hub controller on completion of each trip. The categories may include a category for private trips and a category for business trips. Then, the hub controller may be operable to produce reports of trips undertaken by the vehicle, broken down into private trips and business trips. The stored parameters may be categorized according to the state of the selection means at termination of a trip.

The mobile unit may include global positioning means located at the vehicle and operably connected to the mobile control unit and operable to determine a geographical location of the vehicle and in which the stored parameters are selected from a list including
the geographical location of the vehicle at the start and end of each trip;
the distance travelled for the trip; and
the maximum speed achieved by the vehicle during the trip.

The hub controller may have a data storage means for storing a gazetteer comprising maps of a preselected geographical region. The maps comprising the gazetteer may be street maps and the hub controller may be operable to locate geographical co-ordinates on a respective street map. Further, the hub controller may be operable, in respect of each vehicle, to save information relating to a predetermined geographical region and to identify occasions on which the vehicle moves out of the predetermined geographical region and to generate an alarm and/or a report of parameters relating to trips outside the said region. The hub controller may have secure data storage means having stored thereon identification and contact details for authorized users of the monitoring system and the information made available to authorized users of the system may be categorized, preselected categories of information being made available to preselected authorized users. Then, a first category of information may be made available to a first selection of authorized users and a second category of information may be made available to a second selection of authorized users, the first category containing information relating to the location of the vehicle during trips designated as business trips and the second category containing information relating to the location of the vehicle during both business and private trips.

According to a fourth aspect of the invention there is provided a method for monitoring vehicle usage, the method including
selectively categorizing each vehicle trip into one of a number of categories;
storing at a vehicle predetermined parameters relating to trips undertaken by the vehicle and the category selected for the trip; and
transmitting the stored parameters for each trip to a hub controller; and
storing at the hub controller the transmitted parameters for each trip in separate categories according to the category selected.

The stored parameters for each trip may be transmitted to the hub controller on completion of each trip. Instead, or in addition, the stored parameter may be transmitted to the hub controller when polled by the hub controller and/or at predetermined intervals. The categories may include a category for private trips and a category for business trips. Then, the method may include producing reports of trips undertaken by the vehicle, broken down into private trips and business trips. The stored parameters may be categorized at termination of a trip.

The method may include the step of determining a geographical location of the vehicle and the stored parameters may be selected from a list including
the geographical location of the vehicle at the start and end of each trip;
the distance travelled for the trip; and
the maximum speed achieved by the vehicle during the trip.

The hub controller may have data storage means for storing a gazetteer comprising street maps of a preselected geographical region and the method may include locating geographical co-ordinates on a respective street map. Further, the hub controller may be operable to save information relating to a predetermined geographical region and the method may include the steps of identifying occasions on which the vehicle moves into or out of the predetermined geographical region and generating an alarm and/or a report of parameters relating to trips outside the said region.

Further, the hub controller may have a secure data storage means for storing identification and contact details of for authorized users and the information made available to authorized users of the system may be categorized, preselected categories of information being made available to preselected authorized users. Then, a first category of information may be made available to a first selection of authorized users and a second category of information may be made available to a second selection of authorized users, the first category containing information relating to the location of the vehicle during trips designated as business trips and the second category containing information relating to the location of the vehicle during both business and private trips.

It will be appreciated that the vehicle monitoring system as herein described may be used to perform the method for monitoring vehicle usage.

### BRIEF DESCRIPTION OF THE DRAWINGS

The invention is now described, by way of example, with reference to the accompanying diagrammatic drawings, in which
- Figure 1: shows a schematic view of a vehicle monitoring system in accordance with an aspect of the invention; and
- Figure 2: shows a detail schematic view of the vehicle of Figure 1.

### DETAILED DESCRIPTION OF THE DRAWINGS

In the drawing, reference numeral 10 generally refers to a vehicle monitoring system, in accordance with the invention.

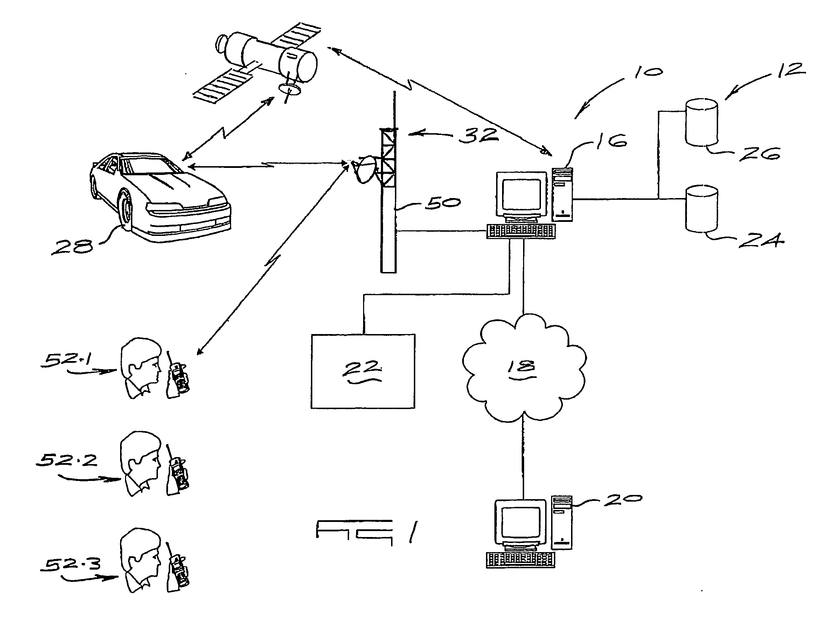

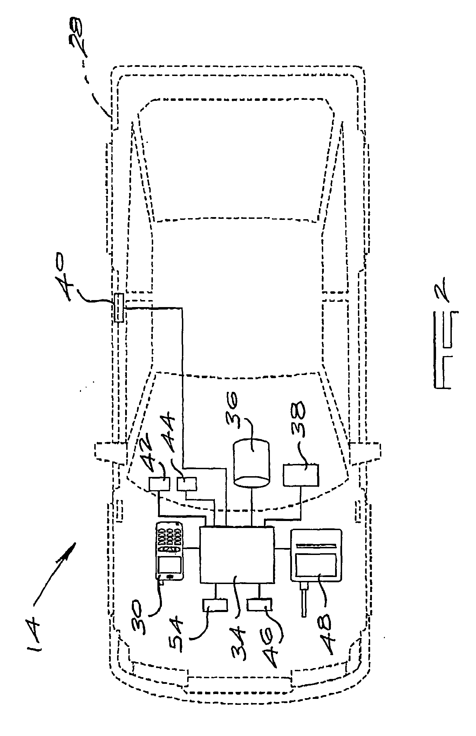

The vehicle monitoring system 10 comprises a hub unit 12 and a plurality of mobile units 14, as shown in Figure 2. The hub unit 12 comprises a hub controller 16, in the form of a computer server, which is situated in a control room (not shown). The hub controller 16 is remotely accessible via the Internet 18 from Internet-enabled computer terminals, PCs or the like. One such Internet-enabled PC 20 is shown on Figure 1, it being understood that a large number of such Internet-enabled devices are able to access the hub controller 16 via the Internet 18. The hub controller 16 is also operably connected to a call centre 22, which enables the receipt of enquiry and alarm telephone calls, and also the making of telephone calls to designated persons in the event of an alarm event. The call centre 22 may have a IVR (Interactive Voice Response) telephone platform. Further, the hub controller 16 has a number of databases defined thereon. In the configuration illustrated, two databases 24 and 26 are shown. A first database 24 stores secure information relating to the operation and condition of vehicles and the identification of authorized contact parties. A second database 26 has saved thereon a gazetteer which, in co-operation with a GPS (Global Positioning System), enables the co-ordinates provided by the GPS to be located on a street map for a specific town, region, province or country.

Further, the monitoring system 10 includes a number of vehicle-based mobile units 14 (as shown in Figure 2), each of which is located in a respective vehicle 28, only one of which is illustrated. The vehicle-based mobile unit 14 includes a transceiver, in the form of a cellular telephone modem 30, which is operable to communicate with the hub controller 16 via a GSM network 32. It will be appreciated that there will be a plurality of mobile units 14 located in various vehicles 28, which are being monitored. The vehicle-based mobile unit 14 also includes a vehicle-based mobile controller 34, which is connected to the vehicle cellular telephone modem 30 and is operable to monitor various parameters in respect of the vehicle 28 and its condition and location, to save the monitored parameters in a memory 36, and to actuate a reporting function on the occurrence of predetermined events. The mobile controller 34 is connected to a number of sensors, including a vehicle motion sensor 38, in this case a number of accelerometers, infra-red sensors 40 for sensing unauthorized entry to the vehicle, vibration sensors 42 for sensing breaking and entering, and the like. A shock sensor (not shown), which is activated in the event of a vehicle impact, is also present. The mobile controller 34 is also connected to the vehicle ignition system at 44 and is able to sense activation or de-activation of the ignition system. Many of these sensors functions exist in existing vehicle alarm and immobilization systems and are thus not shown in the drawing or described in detail herein. It will also be appreciated that there will generally be multiple sensors to perform a single function. However, for illustrative purposes only one such sensor is indicated in each case. Further, sensors for performing other functions may also be connected to the mobile controller. Thus, in use, the vehicle's various sensors 38,40,42,44 will sense vehicle movement and forced entry into the vehicle as well as activation and de-activation of the ignition of the vehicle. Further sensors 46 for the monitoring of distance travelled by the vehicle are also connected to the mobile controller 34. Such sensors are well known in the art and work in a similar manner to the odometer of the vehicle itself. In fact the vehicle odometer may itself be adapted to serve this purpose.

Also part of the vehicle-based monitoring unit 14 and connected to the mobile controller 34 is a GPS positioning device 48 which, in a well known manner, enables the geographical location of the vehicle 28 to be precisely determined and monitored. Communication between the vehicle cellular telephone 30 and the hub controller 16 is by way of automated SMS messages on the GSM cellular telephone network 32. Instead of, or in addition to, the GPS system, the GSM cellular telephone network 32 may serve to locate the vehicle 28 accurately by triangulation from network relay stations, one of which is shown at 50, which are in range of the vehicle cellular telephone 30.

In respect of each vehicle 28, a number of persons (remote transceivers), three of which are shown in Figure 1 at 52.1, 52.2 and 52.3, are authorized for contact and communication via the monitoring system 10. Although it is convenient to talk as if It is persons who are so authorized, it is in fact the cellular telephone sets whose identification or telephone numbers serve to identify the authorized persons, by means of automatic caller line identification, or other means. These persons 52 will usually include the person who ordinarily drives the respective vehicle and members of his family, his friends or his business associates. Details of the vehicle 28 and the identifiers of authorized persons 52 are saved on the secure database 24 of the hub controller 16.

An inventive feature of the vehicle monitoring system 10 is that any of the designated authorized persons 52 may use their cellular telephone to track the location of the vehicle 28 with which they are associated. This is done by any of the relevant persons (say 52.1) making an initiating call to the cellular telephone number of the vehicle 28. The vehicle cellular telephone 30 is set up to immediately drop the call, thereby avoiding call charges. Thereupon, the mobile controller 34 transmits an SMS message to the hub controller 16 via by means of the vehicle cellular telephone 30 via the GSM network 32 with the co-ordinates of the vehicle 28 as determined by the GPS system and the identifier of the person making the initiating call. Alternatively, and in the event of failure of the GPS system or devices, co-ordinates of the vehicle 28 may be determined by triangulation between local cellular telephone network masts 50. In order to perform this latter function, the vehicle monitoring system 10 has access to a database of the GSM service provider(s), which has the geographical co-ordinates of its transmission masts 50. On receipt of the SMS message from the vehicle 28, the hub controller 16 interrogates the secure database 24 to ascertain whether the initiating call was from a designated authorized person (remote transceiver) 52.1. The identifier of the person 52.1 initiating the call is, in this case, either the cellular telephone number of the said person 52.1 or the unique device number of the cellular telephone used. In the event that the identifier matches that held on the database 24, the GPS position is compared with the database gazetteer in the database 26 and the location of the vehicle 28 (with reference to street names) is transmitted to the initiator of the call via SMS. Similar features are provided for authorized persons 52 accessing the hub controller 16 via the Internet 18 by way of a computer terminal 20. In this latter case, a map of the immediate surroundings of the vehicle 28 may be displayed on the terminal 20 and the vehicle's position indicated thereon.

A further feature of the vehicle monitoring system 10 is that instead of seeking the immediate location of the vehicle 28, the authorized person 52 may, by transmitting a predetermined message via SMS, such as the letter "W", instruct the mobile controller 34 of the vehicle 28 to transmit an SMS message once it begins a journey, ie as soon as the vehicle ignition is activated. This feature is particularly important for co-ordinating the movements of commercial vehicles, so that, for example, a delivery vehicle's mobile controller will automatically initiate the transmission of a message to its home base on completion of a delivery or job. The vehicle may then be diverted to a convenient location for the next job and the routes of delivery vehicles may thereby be optimized. A further advantage is that where the driver of a vehicle 28 is, for example, working late, a message will be transmitted indicating that he or she is leaving work. Again, the message is triggered by activation of the ignition of the vehicle 28 on commencement of the journey. The driver may then be expected to arrive home within a certain time and if this fails to eventuate, enquiries may be made timeously as to their whereabouts. This feature contributes to the security of persons having to drive in unsafe conditions or locations.

Further, the vehicle monitoring system 10 is operable to operate in a number of modes, the mode of operation be selectable either by an authorized user 52 of the system 10 by means of an initiating signal to the mobile unit 14 or at the instigation of the hub unit 12, responsive to a signal from an authorized user 52 of the system 10. The following modes of operation are available and are triggered on receipt of an SMS containing a single preselected letter from an authorized user 52:
a) "W" mode: An authorized user-activated monitoring mode in which activation of the ignition of the vehicle 28 and/or movement thereof are reported automatically only to the authorized user 52 sending the initiating signal and the report includes the date, time, speed and heading of the vehicle.
b) "E" mode: Emergency alarm mode in which the initiating signal from the authorized user 52 is equivalent to operation of a conventional panic switch installed in the vehicle 28 and connected to the mobile controller 34 or a wireless panic alarm actuator for a vehicle alarm and an alarm messages is sent to the hub controller 16 and call centre 22 to initiate emergency response.
c) Incident mode: In one embodiment of the monitoring system, the mobile unit 14 records the vehicle speed every second, if the mobile controller 34 means detects that the vehicle 28 is moving. The speed is saved to a buffer 36 accessible by the mobile controller 34, which is able to hold 24 hours of speed records. The mobile controller 34 can be polled by the remote hub unit 12 to download information from the buffer 36. A special characteristic of this mode is triggered either by receipt of a signal from and authorized user 52 or the remote hub unit 12 or by means of a signal from a vehicle sensor and has the effect of protecting information saved in the vehicle buffer 36 and may disable the overwriting of the buffer 36. On receipt of an incident request message, an SMS containing 112 seconds of speed recordings is transmitted from the mobile unit 14 to the remote hub unit 12 or a Datacall may be made to the mobile unit 14 to download the full 24 hour buffer. Thus, parameters relating to the operation of the vehicle 28 on the occurrence of an event such as a collision may be saved for later use in evidence.
f) Direct Reply mode: This mode is triggered either by receipt of a signal from an authorized user 52 or is automatically triggered in event of failure or absence of the communication link with the remote hub unit 12. Communications are then restricted to those between the mobile unit 14 and the authorized user(s) 52. Geographical position information is given without reference to a gazetteer and will be given in latitude and longitude or proximity to a radio beacon.

Further, the vehicle monitoring system 10 is operable so that the mobile unit 14 may be armed as a vehicle immobilizer and/or alarm system by means of an actuator, such as, for example, an infra-red remote control device (not shown). The system then operates as in E-mode.

Instead of transmitting an SMS message comprised of a letter of the alphabet, each authorized user 52 of the system may have a number of ways of transmitting messages of differing content via his cellular telephone and the vehicle modem may be operable to receive initiating signals in one or more of these modes. For example, the user 52 may have the facility to count the number of rings on his cellular telephone before hanging up, the number being indicative of a corresponding message or meaning; or may have a number of different numbers (or make use of additional digits available on existing numbers) allocated for his use, the use of a number being indicative of a corresponding message or meaning; or may make use of various facilities provided on the cellular telephone, such as voice, fax or data transmission, each of which being indicative of a corresponding message or meaning. It will be appreciated that the vehicle modem, in cooperation with the user's cellular telephone, will be operable to provide the relevant facility for use by the user 52. Thus, in such an embodiment of the vehicle monitoring system 10, use is made of the trailing unused digits that are available on cellular telephone networks. In most circumstances, the additional digits are simply ignored by the system. However, an additional trailing digit may be used, if allocated to an authorized user 52 of the system 10, to indicate the occurrence of a specific event or circumstance. For example, dialling the cellphone number of the vehicle with an additional "1" may indicate a panic alarm situation; the additional digit "2" may indicate a mechanical malfunction of the vehicle, and so on. In this embodiment of the monitoring system 10, the identifier transmitted to the hub unit will, of itself, be sufficient to indicate the existence of the respective event or circumstance. The vehicle monitoring system 10 may be used in combination with alarm and immobilisation systems and may be retrofitted to these systems, so that, for example, on the triggering of an alarm that the vehicle 28 has been moved without the ignition being activated, the hub controller 16 may transmit a message to the mobile controller 34 and the position of the vehicle determined, as well as alarm calls being sent to designated authorized persons 52 and/or a vehicle recovery team. Similarly, breach of security at the vehicle 28, for example by way of forced entry, will also trigger a normal local alarm and immobilizer of the vehicle 28 and transmit an alarm message to the hub controller 16, on receipt of which, messages may be sent to authorized persons 52, either via the call centre or by automated SMS. Further, on Initiation of an alarm signal, for example by a driver of the vehicle 28 that an emergency situation has arisen, for example that the vehicle 28 has been stolen or highjacked, the vehicle may be remotely immobilized by the operators of the hub controller 16, using the vehicle monitoring system to transmit a relevant instruction to the mobile controller 34 of the vehicle 28 to immobilize the vehicle 28 as soon as it is stationary.

A further novel inventive feature of the vehicle monitoring system 10 is that the system is automatically programmed to record the trip mileage for every trip undertaken by the vehicle 28. The GPS location of the vehicle 28 on commencement of each trip is saved to the memory 36 for transmission to the secure database 24 at the hub controller 16. The distance travelled is also recorded at predetermined time intervals along the trip by means of the distance sensor 46 and these are saved to the buffer memory 36, which is accessible by the mobile controller 34. If the vehicle location is polled during the trip by the hub controller 16, the buffer memory data is transmitted to the hub controller 16 and stored in the secure database 24. However, if this not the case, a limited number of entries are saved to the buffer memory 36 and buffered data entries are dropped as new ones are added to the buffer memory 36. On termination of the trip, the recorded distance of the trip and GPS position at the commencement and termination of the trip are transmitted via SMS to the hub controller 16 for storage in the secure database 24. An actuator 54 is provided in the vehicle 28 and is operably connected to the mobile controller 34. The actuator 54 may be a manually operated switch or a infra red or radio frequency remote control, or any similar device and has at least two conditions selectable by the operator of the vehicle 28. Generally, the two positions will indicate either that the current trip being undertaken is a private trip or that the trip is for business purposes. In the event that the driver initiates a trip without remembering to activate the actuator 54, he may activate the actuator 54 to select one of the categories at any time during the trip. At the end of the trip, data indicative of the position of the actuator 54 selected at that time is transmitted together with the other trip data and stored in the secure database 24. Accordingly, a record of trips identifying the geographical location of the vehicle 28 at the commencement and end of each trip and the distance therebetween, as well as whether the trip has been for business or private purposes is saved. The data is saved temporarily on the buffer memory 36 of the mobile controller 34, but is archived on the secure database 24 at the end of every trip. On request, or at regular intervals, a trip report may be generated and provided to the owner of the vehicle. It will be appreciated that this information may be required for income tax purposes and may also be useful for fleet management purposes. Further, an alarm may be fitted to the mobile unit 14 to alert the driver to the fact that he has not selected the actuator 54 to elect whether a trip is a business or private trip. Still further, the vehicle monitoring system 10 may be configured so that the position of the vehicle 28 may be disclosed to only selected authorized persons 52, depending on the category elected by the driver. For example, if the driver elects that the trip being performed is for private purposes then it may be that only certain preselected authorized persons, say 52.1 and 52.2 will be able to establish the geographical location of the vehicle 28 during that trip, while other persons, say 52.3, will have access to the location of the vehicle 28 only during business trips. The configuration of authorized persons and information disclosure rules is made at the hub controller 16. This facility may also allow for the selection of information, other than geographical location, to be disclosed and the basis for selection may be any criterion, and not only the selection of the relevant category on the vehicle actuator 54. Thus, for example, only certain selected persons, say 52.1, may be informed of an alarm event at the vehicle 28 or may be authorized to arm the alarm system of the vehicle 28, while other persons, 52.2 say, may be authorized to receive notification of the location of the vehicle 28. Further, the hub controller 16 has a trip calculator function for calculating reporting parameters relating to the various categories of trips recorded. The hub controller 16 may be accessible via the Internet to enable certain preselected authorized users 52 of the system to amend predetermined parameters relating to the stored trip information. Thus, in the case where the user of the vehicle 28 omits to operate the selection of categories, the trip parameters may be recorded by default in a particular preselected category. Thereafter, if this categorization is Incorrect, the trip may be re-categorized. However, certain information, for example distance, speed, route or starting and end points may be protected from alteration.

A further inventive feature of the vehicle monitoring system 10 is that control parameters may be set identifying geographical limits within which the vehicle 28 may operate or outside of which it may not operate. These parameters, identifying a geographical region are saved to a database of the hub controller 16. As soon as the vehicle 28 moves into or out of the predefined area, as determined by the GPS system, the hub controller 16 may be programmed to trigger an alarm, alternatively simply to record as an exception those trips outside a specific predefined geographical area. This information may be used for both insurance and driver monitoring purposes. To enable this facility, the hub controller 16 is configured to poll the mobile controller 34 at predefined regular intervals or the mobile controller 34 is programmed to transmit the location of the vehicle 28 at predetermined regular intervals. A number of geographical regions may be predefined. The predetermined geographical regions may be defined by national or provincial or local boundaries, or may be other defined territories, such as, for example, pay-to-enter areas of cities. Further, the hub controller 16 may be operable to trigger an alarm signal with such a region or boundary is approached within predetermined limits. The hub controller 16 may be operable to permit predetermined certain authorized users 52 of the system to define the geographical regions and to activate operation of the alarm and recording system from time-to-time. These facilities may be accessed and changed via the Internet by the predetermined authorized users. Instead, the facility may be activated and de-activated by cellular telephone message.

## Claims

1. A vehicle monitoring system including
a hub unit and a plurality of mobile units, each mobile unit locatable at a vehicle and including
a vehicle modem directly accessible by cellular telephone users via a cellular telephone network and operable to communicate with a remote hub unit via the cellular telephone network; and
mobile control means operably connected to the vehicle modem and operable, on receipt of an initiating signal from a cellular telephone to actuate a reporting function and to transmit to the remote hub unit data representative of at least one predetermined parameter relating to the vehicle and an identifier of the cellular telephone transmitting the Initiating signal; and
the hub unit including
hub access means operable to access a cellular telephone network; and
a hub controller operably connected to the hub access means and having data storage means having stored thereon identification and contact details for authorized users of the monitoring system, the hub controller being operable, on receipt of a data transmission from a mobile unit, to ascertain whether the identifier of the cellular telephone that transmitted the initiating signal for the said data transmission matches the identification of an authorized user and, if so, to transmit to the authorized user via the cellular telephone network preselected information related to the vehicle in question.

2. The vehicle monitoring system as claimed in claim 1, in which the hub controller is accessible directly by authorized users of the system to ascertain information related to the Instantaneous vehicle parameters and/or data saved to the data storage means of the hub controller.

3. The vehicle monitoring system of claim 1, in which the mobile unit includes a GPS location device operably connected to the mobile control means and in which the at least one predetermined vehicle parameter includes the geographical location of the vehicle as determined by the GPS and the preselected information transmitted to the authorized user includes the information relating to the geographical location of the vehicle.

4. The vehicle monitoring system of claim 1, in which the mobile unit includes a sensor selected from a list of sensors comprising:
a sensor for sensing activation of the ignition of the vehicle;
a motion sensor for sensing motion of the vehicle; and
at least one tamper detection sensor for sensing tampering with the vehicle, the respective sensor being operably connected to the mobile control means and in which the at least one predetermined vehicle parameter includes the triggering of the said sensor and the preselected information transmitted to the authorized user includes Information relating to the triggering of the said sensor.

5. The vehicle monitoring system of claim 4, in which the mobile unit includes a sensor for sensing activation of the ignition of the vehicle and a motion sensor for sensing motion of the vehicle and in which the at least one predetermined vehicle parameter includes the triggering of the motion sensor without triggering of the ignition sensor and the preselected information transmitted to the authorized user includes information relating to the said setting in motion of the vehicle.

6. The vehicle monitoring system as claimed in claim 4 or claim 5, in which the mobile controller is armed to react to sensing of an event by a respective sensor by way of an SMS message received via the vehicle cellular telephone, the mobile controller transmitting to the hub controller, on receipt of the said SMS message, an identifier of the cellular telephone transmitting the initiating SMS and the hub controller being operable, on receipt of the transmission from the mobile unit, to ascertain whether the identifier of the cellular telephone that transmitted the initiating SMS for the said data transmission matches the identification of an authorized user and, if so, to transmit an instruction to the mobile controller to arm the mobile unit to react to the triggering of the respective sensor for the vehicle.

7. The vehicle monitoring system as claimed in claim 3, in which the hub controller is operable, in respect of each vehicle, to save information relating to a predetermined geographical region and to identify occasions on which the vehicle moves into or out of the predetermined geographical region and to generate an alarm and/or a report of parameters relating to trips outside the said region.

8. The vehicle monitoring system as claimed in any one of the preceding claims, in which the mobile unit includes selection means operable by an operator of the vehicle to selectively categorize vehicle trips into one of a number of categories and the mobile control means is operable to store predetermined parameters relating to trips undertaken by the vehicle and to transmit the stored parameters for each trip to the hub controller on completion of each trip and in which the control means stores the parameters for each trip In separate categories according to the category selected by the operator of the vehicle by means of the selection means.

9. The vehicle monitoring system as claimed in any one of claim 8, in which the stored parameters are categorized according to the state of the selection means at termination of a trip.

10. The vehicle monitoring system as claimed in claim 1 or claim 2, In which the information made available to authorized users of the system is categorized, preselected categories of information being made available to preselected authorized users.

11. A method for monitoring a vehicle, the method including
receiving directly at the vehicle being monitored an initiating signal from a user of a vehicle monitoring system via a cellular telephone;
automatically transmitting from the vehicle to a hub controller, on receipt of an initiating signal, by means of a cellular telephone network, a signal containing data representative of at least one predetermined parameter relating to the vehicle and an identifier of the cellular telephone transmitting the initiating signal; and
on receipt of the signal from the vehicle, ascertaining whether the identifier of the cellular telephone that transmitted the initiating signal for the said data signal matches the identification of an authorized user and, if so, transmitting to the authorized user via the cellular telephone network preselected information related to the vehicle in question.

12. The method as claimed in claim 11, in which the hub controller is accessible directly by authorized users of the system to ascertain information related to the instantaneous vehicle parameters and/or data saved to the data storage means of the hub controller.

13. The method as claimed in claim 11, which includes the step of ascertaining a geographical location for the vehicle and in which the at least one predetermined vehicle parameter includes the geographical location of the vehicle as ascertained and the preselected information transmitted to the authorized user includes the information relating to the geographical location of the vehicle.

14. The method as claimed in claim 11, which includes the step of sensing the event of at least one of:
activation of the ignition of the vehicle;
motion of the vehicle; and
tampering with the vehicle including the vehicle electrical system, and in which the at least one predetermined vehicle parameter includes sensing the respective event and the preselected information transmitted to the authorized user includes information relating to the sensing of the event.

15. The method as claimed In claim 14, which includes the step of sensing the event of motion of the vehicle in the absence of activation of the ignition of the vehicle and in which the at least one predetermined vehicle parameter includes the said sensed event and the preselected information transmitted to the authorized user includes information relating to the event.

16. The method as claimed in claim 14 or claim 15, which includes the steps of
receiving at the vehicle an initiating arming SMS message via the cellular telephone network;
transmitting to the hub controller, on receipt of the said arming SMS message, data representative of an Identifier of the cellular telephone transmitting the initiating SMS;
on receipt of the transmission by the hub controller, ascertaining whether the identifier of the cellular telephone that transmitted the initiating SMS for the said data transmission matches the identification of an authorized user and, if so, transmitting an instruction to arm a respective senor at the vehicle to sense the event.

17. The method as claimed in claim 13, in which the hub controller is operable to save information relating to a predetermined geographical region and the method includes the steps of identifying occasions on which the vehicle moves into or out of the predetermined geographical region and generating an alarm and/or a report of parameters relating to trips outside the said region.

18. The method as claimed in any one of claims 11 to 17, which includes the steps of
selectively categorizing vehicle trips into one of a number of categories;
storing at the vehicle predetermined parameters relating to trips undertaken by the vehicle and to transmitting the stored parameters for each trip to the hub controller on completion of each trip; and
storing at the hub control means the parameters for each trip in separate categories according to the category selected.

19. The method as claimed in claim18, in which the stored parameters are categorized at termination of a trip.

20. The method as claimed in claim 11, in which the information made available to authorized users of the system is categorized, preselected categories of information being made available to preselected authorized users.

## Patentansprüche

1. Fahrzeugüberwachungssystem, das Folgendes enthält:
eine Hub-Einheit und mehrere Mobileinheiten, wobei jede Mobileinheit in einem Fahrzeug angeordnet werden kann und Folgendes enthält:
ein Fahrzeugmodem, auf das Mobiltelefonnutzer direkt über ein Mobiltelefonnetz zugreifen können und das in der Lage ist, mit einer fernbedienbaren Hub-Einheit über das Mobiltelefonnetz zu kommunizieren; und
ein mobiles Steuerungsmittel, das mit dem Fahrzeugmodem wirkverbunden ist und in der Lage ist, bei Erhalt eines Initiierungssignals von einem Mobiltelefon eine Berichtsfunktion auszulösen und an die fernbedienbare Hub-Einheit Daten, die für mindestens einen zuvor festgelegten Parameter stehen, der sich auf das Fahrzeug bezieht, und einen Identifikator des Mobiltelefons, das das Initiierungssignal sendet, zu senden; und
wobei die Hub-Einheit Folgendes enthält:
ein Hub-Zugangsmittel, das in der Lage ist, auf ein Mobiltelefonnetz zuzugreifen; und
einen Hub-Controller, der mit dem Hub-Zugangsmittel wirkverbunden ist und ein Datenspeichermittel aufweist, in dem Identifikations- und Kontaktdetails für befugte Nutzer des Überwachungssystems gespeichert sind, wobei der Hub-Controller in der Lage ist, bei Erhalt einer Datenübertragung von einer Mobileinheit festzustellen, ob der Identifikator des Mobiltelefons, welches das Initiierungssignal für die Datenübertragung sendete, zu der Identifikation eines befugten Nutzers passt, und wenn ja, an den befugten Nutzer über das Mobiltelefonnetz zuvor ausgewählte Informationen zu senden, die sich auf das betreffende Fahrzeug beziehen.

2. Fahrzeugüberwachungssystem nach Anspruch 1, wobei durch befugte Nutzer des Systems auf den Hub-Controller direkt zugegriffen werden kann, um Informationen, die sich auf die Parameter des betreffenden Fahrzeugs und/oder auf Daten, die in dem Datenspeichermittel des Hub-Controllers gespeichert sind, beziehen, zu bestätigen.

3. Fahrzeugüberwachungssystem nach Anspruch 1, wobei die Mobileinheit ein GPS-Positionsbestimmungsgerät enthält, das mit dem mobilen Steuerungsmittel wirkverbunden ist, und wobei der mindestens eine zuvor festgelegte Fahrzeugparameter den geografischen Standort des Fahrzeugs gemäß Bestimmung durch das GPS enthält und die zuvor ausgewählten Informationen, die an den befugten Nutzer gesendet werden, die Informationen über den geografischen Standort des Fahrzeugs enthalten.

4. Fahrzeugüberwachungssystem nach Anspruch 1, wobei die Mobileinheit einen Sensor enthält, der aus folgender Liste mit Sensoren ausgewählt ist:
ein Sensor zum Detektieren einer Aktivierung der Zündung des Fahrzeugs;
ein Bewegungssensor zum Detektieren einer Bewegung des Fahrzeugs; und
mindestens ein Manipulationsdetektionssensor zum Detektieren eines Manipulationsversuchs an dem Fahrzeug, wobei der jeweilige Sensor mit dem mobilen Steuerungsmittel wirkverbunden ist, und wobei der mindestens eine zuvor festgelegte Fahrzeugparameter das Auslösen des Sensor enthält und die zuvor ausgewählten Informationen, die an den befugten Nutzer gesendet werden, Informationen über das Auslösen des Sensors enthalten.

5. Fahrzeugüberwachungssystem nach Anspruch 4, wobei die Mobileinheit einen Sensor zum Detektieren einer Aktivierung der Zündung des Fahrzeugs und einen Bewegungssensor zum Detektieren einer Bewegung des Fahrzeugs enthält, und wobei der mindestens eine zuvor festgelegte Fahrzeugparameter das Auslösen des Bewegungssensors ohne Auslösen des Zündungssensors enthält und die zuvor ausgewählte Informationen, die an den befugten Nutzer gesendet werden, Informationen über das Inbewegungsetzen des Fahrzeugs enthalten.

6. Fahrzeugüberwachungssystem nach Anspruch 4 oder Anspruch 5, wobei der Mobil-Controller dafür scharfgeschaltet ist, auf das Detektieren eines Ereignisses durch einen jeweiligen Sensor mittels einer SMS-Nachricht zu reagieren, die über das Fahrzeug-Mobiltelefon empfangen wird, wobei der Mobil-Controller an den Hub-Controller, bei Erhalt der SMS-Nachricht, einen Identifikator des Mobiltelefons sendet, das die Initiierungs-SMS sendet, und der Hub-Controller in der Lage ist, bei Erhalt der Übertragung von der Mobileinheit festzustellen, ob der Identifikator des Mobiltelefons, das die Initiierungs-SMS für die Datenübertragung sendete, zu der Identifikation eines befugten Nutzers passt, und wenn ja, eine Anweisung an den Mobil-Controller zu senden, die Mobileinheit dafür scharfzuschalten, auf das Auslösen des jeweilige Sensors für das Fahrzeug zu reagieren.

7. Fahrzeugüberwachungssystem nach Anspruch 3, wobei der Hub-Controller in der Lage ist, in Bezug auf jedes Fahrzeugs, Informationen zu speichern, die sich auf eine zuvor festgelegte geografische Region beziehen, und Gelegenheiten zu identifizieren, bei denen sich das Fahrzeug in die zuvor festgelegte geografische Region oder aus der zuvor festgelegten geografischen Region bewegt, und einen Alarm und/oder einen Bericht von Parametern zu erzeugen, die sich auf Fahrten außerhalb der Region beziehen.

8. Fahrzeugüberwachungssystem nach einem der vorangehenden Ansprüche, wobei die Mobileinheit ein Auswahlmittel enthält, das durch einen Lenker des Fahrzeugs bedient werden kann, um selektiv Fahrzeugfahrten in eine aus einer Anzahl von Kategorien zu kategorisieren, und das mobile Steuerungsmittel in der Lage ist, zuvor festgelegte Parameter, die sich auf Fahrten beziehen, die durch das Fahrzeug unternommen werden, zu speichern, und die gespeicherten Parameter für jede Fahrt nach Beendigung jeder Fahrt an den Hub-Controller zu senden, und wobei das Steuerungsmittel die Parameter für jeder Fahrt in separaten Kategorien entsprechend der durch den Lenker des Fahrzeugs ausgewählten Kategorie mit Hilfe des Auswahlmittels speichert.

9. Fahrzeugüberwachungssystem nach Anspruch 8, wobei die gespeicherten Parameter entsprechend dem Zustand des Auswahlmittels am Ende einer Fahrt kategorisiert werden.

10. Fahrzeugüberwachungssystem nach Anspruch 1 oder Anspruch 2, wobei die Informationen, die befugten Nutzern des Systems zur Verfügung gestellt werden, kategorisierte, zuvor ausgewählte Kategorien von Informationen darstellen, die zuvor ausgewählten befugten Nutzer zur Verfügung gestellt werden.

11. Verfahren zum Überwachen eines Fahrzeugs, wobei das Verfahren Folgendes enthält:
Empfangen, direkt in dem überwachten Fahrzeug, eines Initiierungssignals von einem Nutzer eines Fahrzeugüberwachungssystems über ein Mobiltelefon;
automatisches Senden, von dem Fahrzeug an einen Hub-Controller bei Erhalt eines Initiierungssignals mittels eines Mobiltelefonnetzes, eines Signals, das Daten, die für mindestens einen zuvor festgelegten Parameter stehen, der sich auf das Fahrzeug bezieht, und einen Identifikator des Mobiltelefons, welches das Initiierungssignal sendet, enthält; und
bei Erhalt des Signals von dem Fahrzeug, Feststellen, ob der Identifikator des Mobiltelefons, welches das Initiierungssignal für das Datensignal sendete, zu der Identifikation eines befugten Nutzers passt, und wenn ja, Senden, an den befugten Nutzer über das Mobiltelefonnetz, zuvor ausgewählter Informationen, die sich auf das betreffende Fahrzeug beziehen.

12. Verfahren nach Anspruch 11, wobei durch befugte Nutzer des Systems auf den Hub-Controller direkt zugegriffen werden kann, um Informationen, die sich auf die Parameter des betreffenden Fahrzeugs und/oder auf Daten, die in dem Datenspeichermittel des Hub-Controllers gespeichert sind, beziehen, zu bestätigen.

13. Verfahren nach Anspruch 11, das den Schritt des Feststellens eines geografischen Standortes für das Fahrzeug enthält, und wobei der mindestens eine zuvor festgelegte Fahrzeugparameter den festgestellten geografischen Standort des Fahrzeugs enthält und die zuvor ausgewählten Informationen, die an den befugten Nutzer gesendet werden, die Informationen über den geografischen Standort des Fahrzeugs enthalten.

14. Verfahren nach Anspruch 11, das den Schritt enthält, das Ereignis von mindestens einem von Folgenden zu detektieren:
Aktivierung der Zündung des Fahrzeugs;
Bewegung des Fahrzeugs; und
Manipulieren des Fahrzeugs, einschließlich der elektrischen Anlage des Fahrzeugs, und wobei der mindestens eine zuvor festgelegte Fahrzeugparameter das Detektieren des jeweiligen Ereignisses enthält und die zuvor ausgewählten Informationen, die an den befugten Nutzer gesendet werden, Informationen über das Detektieren des Ereignisses enthalten.

15. Verfahren nach Anspruch 14, das den Schritt enthält, das Ereignis des Bewegens des Fahrzeugs bei fehlender Aktivierung der Zündung des Fahrzeugs zu detektieren, und wobei der mindestens eine zuvor festgelegte Fahrzeugparameter das detektierte Ereignis enthält und die zuvor ausgewählten Informationen, die an den befugten Nutzer gesendet werden, Informationen über das Ereignis enthalten.

16. Verfahren nach Anspruch 14 oder Anspruch 15, das folgende Schritte enthält;
Empfangen, in dem Fahrzeug, einer initiierenden, scharfschaltenden SMS-Nachricht über das Mobiltelefonnetz;
Senden, an den Hub-Controller bei Erhalt der scharfschaltenden SMS-Nachricht, von Daten, die für einen Identifikator des Mobiltelefons stehen, das die Initiierungs-SMS sendet;
bei Erhalt der Übertragung durch den Hub-Controller, Feststellen, ob der Identifikator des Mobiltelefons, das die Initiierungs-SMS für die Datenübertragung sendet, zu der Identifikation eines befugten Nutzers passt, und wenn ja, Senden einer Anweisung zum Scharfschalten eines jeweiligen Sensors in dem Fahrzeug, um das Ereignis zu detektieren.

17. Verfahren nach Anspruch 13, wobei der Hub-Controller in der Lage ist, Informationen über eine zuvor festgelegte geografische Region zu speichern und das Verfahren die Schritte enthält, Gelegenheiten zu identifizieren, bei denen sich das Fahrzeug in die zuvor festgelegte geografische Region oder aus der zuvor festgelegten geografischen Region bewegt, und einen Alarm und/oder einen Bericht von Parametern zu erzeugen, die sich auf Fahrten außerhalb der Region beziehen.

18. Verfahren nach einem der Ansprüche 11 bis 17, das folgende Schritte enthält:
selektives Kategorisieren von Fahrzeugfahrten in eine aus einer Anzahl von Kategorien;
Speichern, in dem Fahrzeug, von zuvor festgelegten Parametern, die sich auf Fahrten beziehen, die durch das Fahrzeug unternommen werden, und Senden der gespeicherten Parameter für jede Fahrt an den Hub-Controller nach Beendigung jeder Fahrt; und
Speichern, in dem Hub-Steuerungsmittel, der Parameter für jede Fahrt in separaten Kategorien entsprechend der ausgewählten Kategorie.

19. Verfahren nach Anspruch 18, wobei die gespeicherten Parameter am Ende einer Fahrt kategorisiert werden.

20. Verfahren nach Anspruch 11, wobei die Informationen, die befugten Nutzern des Systems zur Verfügung gestellt werden, kategorisierte, zuvor ausgewählte Kategorien von Informationen darstellen, die zuvor ausgewählten befugten Nutzer zur Verfügung gestellt werden.

## Revendications

1. Système de surveillance d'un véhicule comprenant
une unité de plateforme centrale et une pluralité d'unités mobiles, chaque unité mobile étant positionnable au niveau d'un véhicule et comprenant
un modem de véhicule directement accessible par les utilisateurs d'un téléphone cellulaire via un réseau de téléphonie cellulaire et fonctionnel pour communiquer avec une unité de plateforme centrale distante via le réseau de téléphonie cellulaire ; et
un moyen de commande mobile relié de manière fonctionnelle au modem de véhicule et fonctionnel pour, à réception d'un signal de déclenchement en provenance d'un téléphone cellulaire, actionner une fonction de création de rapport et transmettre à l'unité de plateforme centrale distante des données représentatives d'au moins un paramètre prédéterminé relatif au véhicule, et un identifiant du téléphone cellulaire transmettant le signal de déclenchement ; et
l'unité de plateforme centrale comprenant
un moyen d'accès à la plateforme centrale fonctionnel pour accéder à un réseau de téléphonie cellulaire ; et
un dispositif de commande de la plateforme centrale relié de manière fonctionnelle au moyen d'accès à la plateforme centrale et présentant un moyen de stockage de données stockant des informations d'identification et de contact pour les utilisateurs autorisés du système de surveillance, le dispositif de commande de la plateforme centrale étant fonctionnel pour, à réception d'une transmission de données en provenance d'une unité mobile, vérifier si l'identifiant du téléphone cellulaire qui a transmis le signal de déclenchement pour ladite transmission de données correspond ou non à l'identification d'un utilisateur autorisé, et si tel est le cas, transmettre à l'utilisateur autorisé, via le réseau de téléphonie cellulaire, des informations présélectionnées relatives au véhicule en question.

2. Système de surveillance d'un véhicule selon la revendication 1, dans lequel le dispositif de commande de la plateforme centrale est accessible directement par des utilisateurs autorisés du système afin de vérifier des informations relatives aux paramètres instantanés du véhicule et/ou les données sauvegardées sur le moyen de stockage de données du dispositif de commande de la plateforme centrale.

3. Système de surveillance d'un véhicule selon la revendication 1, dans lequel l'unité mobile comprend un dispositif de localisation GPS relié de manière fonctionnelle au moyen de commande mobile, et dans lequel le au moins un paramètre de véhicule prédéterminé comprend la position géographique du véhicule telle que déterminée par le GPS, et les informations présélectionnées transmises à l'utilisateur autorisé comprennent les informations relatives à la position géographique du véhicule.

4. Système de surveillance d'un véhicule selon la revendication 1, dans lequel l'unité mobile comprend un capteur choisi dans une liste de capteurs comprenant :
un capteur destiné à détecter l'activation de l'allumage du véhicule ;
un capteur de mouvement destiné à détecter le mouvement du véhicule ; et
au moins un capteur de détection de fraude destiné à détecter une fraude avec le véhicule, le capteur respectif étant relié de manière fonctionnelle au moyen de commande mobile, et dans lequel le au moins un paramètre de véhicule prédéterminé comprend le déclenchement dudit capteur, et les informations présélectionnées transmises à l'utilisateur autorisé comprennent des informations relatives au déclenchement dudit capteur.

5. Système de surveillance d'un véhicule selon la revendication 4, dans lequel l'unité mobile comprend un capteur destiné à détecter l'activation de l'allumage du véhicule et un capteur de mouvement destiné à détecter le mouvement du véhicule, et dans lequel le au moins un paramètre de véhicule prédéterminé comprend le déclenchement du capteur de mouvement sans déclenchement du capteur d'allumage, et les informations présélectionnées transmises à l'utilisateur autorisé comprennent des informations relatives à ladite mise en mouvement du véhicule.

6. Système de surveillance d'un véhicule selon la revendication 4 ou la revendication 5, dans lequel le dispositif de commande mobile est armé pour réagir à la détection d'un évènement par un capteur respectif à l'aide d'un message SMS reçu via le téléphone cellulaire du véhicule, le dispositif de commande mobile transmettant au dispositif de commande de la plateforme centrale, à réception dudit message SMS, un identifiant du téléphone cellulaire transmettant le SMS de déclenchement, et le dispositif de commande de la plateforme centrale étant fonctionnel pour, à réception de la transmission en provenance de l'unité mobile, vérifier si l'identifiant du téléphone cellulaire ayant transmis le SMS de déclenchement pour ladite transmission de données correspond ou non à l'identification d'un utilisateur autorisé, et si tel est le cas, transmettre une instruction au dispositif de commande mobile pour armer l'unité mobile afin qu'elle réagisse au déclenchement du capteur respectif pour le véhicule.

7. Système de surveillance d'un véhicule selon la revendication 3, dans lequel le dispositif de commande de la plateforme centrale est fonctionnel pour, pour respectivement chaque véhicule, enregistrer des informations relatives à une région géographique prédéterminée, et identifier les moments auxquels le véhicule entre dans ou quitte la région géographique prédéterminée, et générer une alarme et/ou un rapport de paramètres relatifs à des déplacements à l'extérieur de ladite région.

8. Système de surveillance d'un véhicule selon l'une quelconque des revendications précédentes, dans lequel l'unité mobile comprend un moyen de sélection actionnable par un opérateur du véhicule pour catégoriser de manière sélective les déplacements du véhicule dans l'une parmi plusieurs catégories, et le moyen de commande mobile est fonctionnel pour stocker des paramètres prédéterminés relatifs aux déplacements entrepris par le véhicule, et transmettre les paramètres stockés pour chaque déplacement au dispositif de commande de la plateforme centrale une fois chaque déplacement terminé, et dans lequel le moyen de commande stocke les paramètres pour chaque déplacement dans des catégories distinctes selon la catégorie choisie par l'opérateur du véhicule au moyen du moyen de sélection.

9. Système de surveillance d'un véhicule selon l'une quelconque de la revendication 8, dans lequel les paramètres stockés sont catégorisés selon l'état du moyen de sélection à la fin d'un déplacement.

10. Système de surveillance d'un véhicule selon la revendication 1 ou la revendication 2, dans lequel les informations rendues disponibles aux utilisateurs autorisés du système sont catégorisées, des catégories présélectionnées d'informations étant rendues disponibles aux utilisateurs autorisés présélectionnés.

11. Procédé de surveillance d'un véhicule, le procédé comprenant
la réception, directement au niveau du véhicule surveillé, d'un signal de déclenchement en provenance d'un utilisateur d'un système de surveillance de véhicule, via un téléphone cellulaire ;
la transmission automatique, du véhicule vers un dispositif de commande de la plateforme centrale, à réception d'un signal de déclenchement, au moyen d'un réseau de téléphonie cellulaire, d'un signal contenant des données représentatives d'au moins un paramètre prédéterminé relatif au véhicule et d'un identifiant du téléphone cellulaire transmettant le signal de déclenchement ; et
à réception du signal en provenance du véhicule, le fait de vérifier si l'identifiant du téléphone cellulaire ayant transmis le signal de déclenchement pour ledit signal de données correspond ou non à l'identification d'un utilisateur autorisé, et si tel est le cas, la transmission à l'utilisateur autorisé, via le réseau de téléphonie cellulaire, d'informations présélectionnées relatives au véhicule en question.

12. Procédé selon la revendication 11, dans lequel le dispositif de commande de la plateforme centrale est accessible directement à des utilisateurs autorisés du système afin de vérifier les informations relatives aux paramètres instantanés du véhicule et/ou les données sauvegardées sur le moyen de stockage de données du dispositif de commande de la plateforme centrale.

13. Procédé selon la revendication 11, qui comprend l'étape de vérification d'une position géographique pour le véhicule, et dans lequel le au moins un paramètre de véhicule prédéterminé comprend la position géographique du véhicule telle que vérifiée, et les informations présélectionnées transmises à l'utilisateur autorisé comprennent les informations relatives à la position géographique du véhicule.

14. Procédé selon la revendication 11, qui comprend l'étape de détection d'au moins l'un des évènements suivants :
l'activation de l'allumage du véhicule ;
un mouvement du véhicule ; et
une fraude avec le véhicule incluant le système électrique du véhicule, et dans lequel le au moins un paramètre prédéterminé du véhicule comprend la détection de l'évènement respectif, et les informations présélectionnées transmises à l'utilisateur autorisé comprennent des informations relatives à la détection de l'évènement.

15. Procédé selon la revendication 14, qui comprend l'étape de détection de l'évènement de mouvement du véhicule en l'absence d'activation de l'allumage du véhicule, et dans lequel le au moins un paramètre de véhicule prédéterminé comprend ledit évènement détecté, et les informations présélectionnées transmises à l'utilisateur autorisé comprennent des informations relatives à l'évènement.

16. Procédé selon la revendication 14 ou la revendication 15, qui comprend les étapes de
réception, au niveau du véhicule, d'un message SMS d'armement et de déclenchement via le réseau de téléphonie cellulaire ;
transmission au dispositif de commande de la plateforme centrale, à réception dudit message SMS d'armement, des données représentatives d'un identifiant du téléphone cellulaire ayant transmis le SMS de déclenchement ;
à réception de la transmission par le dispositif de commande de la plateforme centrale, fait de vérifier si l'identifiant du téléphone cellulaire ayant transmis le SMS de déclenchement pour ladite transmission de données correspond ou non à l'identification d'un utilisateur autorisé, et si tel est le cas, transmission d'une instruction pour armer un capteur respectif au niveau du véhicule afin de détecter l'évènement.

17. Procédé selon la revendication 13, dans lequel le dispositif de commande de la plateforme centrale est fonctionnel pour sauvegarder des informations relatives à une région géographique prédéterminée, et le procédé comprend les étapes d'identification des moments auxquels le véhicule entre dans ou quitte la région géographique prédéterminée, et de génération d'une alarme et/ou d'un rapport de paramètres relatif aux déplacements à l'extérieur de ladite région.

18. Procédé selon l'une quelconque des revendications 11 à 17, qui comprend les étapes de
catégorisation sélective des déplacements du véhicule dans l'une parmi plusieurs catégories ;
stockage, au niveau du véhicule, des paramètres prédéterminés relatifs aux déplacements entrepris par le véhicule, et transmission des paramètres stockés pour chaque déplacement au dispositif de commande de la plateforme centrale une fois chaque déplacement terminé ; et
stockage, au niveau du moyen de commande de la plateforme centrale, des paramètres pour chaque déplacement dans des catégories distinctes selon la catégorie choisie.

19. Procédé selon la revendication 18, dans lequel les paramètres stockés sont catégorisés à la fin d'un déplacement.

20. Procédé selon la revendication 11, dans lequel les informations rendues disponibles aux utilisateurs autorisés du système sont catégorisées, des catégories présélectionnées d'informations étant rendues disponibles aux utilisateurs autorisés présélectionnés.
